Europäisches Patentamt

European Patent Office

Office européen des brevets

(11) Veröffentlichungsnummer: **0 268 005**
A2

(12) **EUROPÄISCHE PATENTANMELDUNG**

(21) Anmeldenummer: 87104055.6

(22) Anmeldetag: 19.03.87

(51) Int. Cl.⁴: **F 16 F 15/16**

(30) Priorität: 15.11.86 DE 3639190

(43) Veröffentlichungstag der Anmeldung: 25.05.88
Patentblatt 88/21

(84) Benannte Vertragsstaaten: DE FR GB IT

(71) Anmelder: **Firma Carl Freudenberg, Höhnerweg 4,
D-6940 Weinheim/Bergstrasse (DE)**

(72) Erfinder: **Andrä, Rainer Horst, Dr., Dehmer Strasse 19,
D-6250 Limburg 5 (DE)**
Erfinder: **Kurr, Klaus, Dr., Brunnengasse 9,
D-6940 Weinheim-Hohensachsen (DE)**
Erfinder: **Ullrich, Günter, Hagenstrasse 27,
D-6944 Hemsbach (DE)**
Erfinder: **Dörge, Udo, Haydnstrasse 6,
D-6941 Laudenbach (DE)**

(74) Vertreter: **Weissenfeld-Richters, Helga, Dr.,
Höhnerweg 2, D-6940 Weinheim/Bergstrasse (DE)**

(54) **Drehschwingungsdämpfer.**

(57) Ein Drehschwingungsdämpfer, umfassend einen An-
triebs- und einen Abtriebsring (1, 2), die relativ verdrehbar sind
und einen Abstand von der Rotationsachse aufweisende, flüssigkeitsgefüllte Segmentkammern (3) begrenzen. Die Segmentkammern (3) werden in Umfangsrichtung von Wandungen des einen Ringes (1, 2) begrenzt und in dem dazwischenliegenden Sektor von einer mit dem anderen Ring (2, 1) verbundenen Trennwand (4) in zwei Teilkammern (5, 6) unterteilt.
Die Teilkammern (5, 6) sind in wenigstens einem Teilbereich
durch nachgiebige Wandungsteile (8) begrenzt und durch mindestens eine Öffnung (7) verbunden.

EP 0 268 005 A2

## Beschreibung

Die Erfindung betrifft einen Drehschwingungsdämpfer nach dem Oberbegriff von Anspruch 1.

Ein solcher Drehschwingungsdämpfer ist aus der DE-A 31 20 407 bekannt. Die die Teilkammern begrenzenden Maschinenteile sind dabei in einem Teilbereich unnachgiebig ausgebildet, was dazu führt, daß sich bei einer relativen Verdrehung der beiden Ringe stets eine Dämpfungswirkung von gleichbleibender Güte ergibt. Das ist in bezug auf die Isolierung hochfrequenter Schwingungen wenig befriedigend.

Der Erfindung liegt die Aufgabe zugrunde, einen Drehschwingungsdämpfer der eingangs genannten Art derart weiterzuentwickeln, daß sich in bezug auf Verdrehschwingungen einer großen Amplitude eine gute Dämpfungswirkung ergibt und in bezug auf Verdrehschwingungen einer kleinen Amplitude eine gute Isolierung.

Diese Aufgabe wird erfindungsgemäß bei einem Drehschwingungsdämpfer der eingangs genannten Art dadurch gelöst, daß die Teilkammern in wenigstens einem Teilbereich durch nachgiebige Wandungsteile begrenzt sind. Die Teilkammern sind dadurch in der Lage, die sich bei kleinen relativen Verdrehungen ergebenden Volumenveränderungen drucklos aufzufangen, so daß es in diesen Fällen nicht zu einer Durchpressung von Flüssigkeit durch die Verbindungsöffnung kommt. Entsprechende Drehschwingungen werden daher in dem erfindungsgemäßen Drehschwingungsdämpfer in ausgezeichneter Weise isoliert.

Bei Einleitung von Drehschwingungen einer großen Amplitude
ergibt sich demgegenüber in den an eine jede Trennwand beiderseits angrenzenden Teilräumen abwechselnd eine Drucksteigerung, was das Übertreten von Flüssigkeitsbestandteilen durch die Verbindungsöffnung in die Teilräume
niedrigeren Druckes bedingt. Eine gute Dämpfungswirkung
von Drehschwingungen einer großen Amplitude ist hiervon
die Folge.

Für die Auslegung des erfindungsgemäßen Drehschwingungsdämpfers sind im wesentlichen vier Kennzahlen maßgebend:

1. Das Verhältnis der Eigenfrequenz $\sqrt{\dfrac{A_k}{\varkappa \varrho L}}$

   der Flüssigkeitssäule im Kanal zur Dreh-Eigenfrequenz
   des Torosionsschwingungsdämpfers ohne Flüssigkeitsfüllung $\sqrt{\hat{C}/I_D}$ zur Abstimmung des Dämpfungsmaximums.

   $\hat{C} \,\hat{=}\,$ Steifigkeit der Gummidrehfeder; $A_k \,\hat{=}\,$ Kanalquerschnitt
   $I_D \,\hat{=}\,$ Trägheitsmoment der Dämpfermasse
   $\varrho \,\hat{=}\,$ Flüssigkeitsdichte; $L \,\hat{=}\,$ Kanallänge; $\varkappa \,\hat{=}\,$ Volumennachgiebigkeit.

2. Das Verhältnis der viskosen Zeit $S^2 \varrho / \hat{C}$ zur Schwingungsdauer der Drehschwingung $\sqrt{I_D / \hat{C}}$ für die Abstimmung der
   Breitbandigkeit des Dämpfungsverlaufs. Darin bedeutet
   S die charakteristische Länge der Strömung im Kanal und
   $\eta$ die Viskosität der Dämpferflüssigkeit.

3. Das Verhältnis der hydraulischen Steifigkeit bei Frequenzen $\omega / \sqrt{\hat{C} / I_D} \gg 1$, $A_h^2 R^2 / \varkappa$ zur anteiligen Drehsteifigkeit
   $\hat{C}/N$. Zur Abstimmung der dynamischen Verhärtung. Darin ist
   $A_h$ die verdrängende Fläche und R der Wirkradius der Verdrängung.

4. Das Verhältnis der Fläche der Kammerverbindung $A_k$ zur
   verdrängenden Fläche.

Die Volumennachgiebigkeit $\varkappa$ kann gezielt amplitudenabhängig gestaltet werden, so daß Dämpfung und Verhärtung
als Funktion der Relativamplitude abstimmbar werden.

Für die Anwendung werden folgende Zahlenräume beansprucht:

1. $10^{-3} \leq \dfrac{A_K \ I_D}{\varkappa \varrho L \hat{c}} \leq 10^3$

2. $10^{-3} \leq \dfrac{S}{z} \ S^2 \sqrt{\dfrac{\hat{c}}{I_D}} \leq 10^3$

3. $10^{-3} \leq \dfrac{N \ A_h^2 \ R^2}{\varkappa \ \hat{c}} \leq 10^2$

4. $10^{-3} \leq \dfrac{A_K}{A_h} \leq 1$

Bei dem erfindungsgemäßen Drehschwingungsdämpfer sind
alle Maße formgebunden, so daß eine gute Reproduzierbarkeit in der Fertigung gewährleistet ist. Für Metallteile können übliche Toleranzen zugelassen werden.
Schwierig verarbeitbare, hochdämpfende Gummimischungen
entfallen, da die Dämpfungsleistung in der Flüssigkeit
erbracht wird.

Als Dämpfungsflüssigkeiten eignen sich alle einschlägig
Verwendung findenden Substanzen. Besonders geeignet ist
Propandiol. Es ist kostengünstig verfügbar.

Der erfindungsgemäße Drehschwingungsdämpfer zeichnet sich
durch ein gleichbleibendes, ausgezeichnetes Betriebsverhalten über lange Zeiträume aus. Er kann in seinen Eigenschaften gegebenenfalls auch dadurch modifiziert werden,
daß nur ein Teil der verfügbaren Segmentkammern mit
Flüssigkeit gefüllt wird oder daß in einem Teil der
Segmentkammern eine Flüssigkeit mit abweichender Viskosit   zur Anwendung gelangt.

Die Anpassung an besondere Gegebenheiten des Anwendungsfalles ist dadurch besonders einfach.

Die nachgiebigen Wandungsteile der Teilkammern können
aus dünnwandigen Membranen aus plastomeren oder elastomeren Werkstoffen bestehen. Sie haben in diesem Falle
eine besonders gute Nachgiebigkeit, was die weitgehend
drucklose Volumenaufnahme bei Einleitung von Drehschwingungen kleiner Amplitude gestattet. Die Verwendung von
dünnwandigen, biegesteifen Blättchen, welche durch Ringmembranen von den umgebenden Wandungsteilen gehalten
werden, ist jedoch ebenfalls möglich.

Die nachgiebigen Wandungsteile können zwischen den Teilkammern und der Außenluft vorgesehen sein, was die Kontrolle der Funktion erleichtert. Eine Anordnung in der
zwei zusammengehörige Teilkammern voneinander scheidenden Trennwand ist jedoch ebenfalls möglich. Sie empfiehlt
sich in Anwendungsfällen, in denen der Drehschwingungsdämpfer einer größeren mechanischen Belastung von außen
ausgesetzt ist.

Die Größe der Verdrehamplitude des erfindungsgemäßen
Drehschwingungsdämpfers, bei der beginnend die Dämpfungswirkung einsetzt, läßt sich sehr exakt festlegen, wenn
das Spiel der beweglichen Wandungsteile durch Anschläge
begrenzt ist. Eine entsprechende Ausbildung empfiehlt
sich vor allem in den Fällen, in denen hochfrequente
Störschwingungen, die der Isolierung bedürfen, zusätzlich
zu tieffrequenten Schwingungen auftreten, welche der
Dämpfung bedürfen.

Die nachgiebigen Wandungsteile können auch federnd aufgehängt sein, um einen allmählichen Übergang von dem
dämpfungsfreien zu dem gedämpften Betriebszustand des
Drehschwingungsdämpfers zu erhalten. In vielen Fällen
derartiger Ausbildung kann sich die Verwendung von Anschlägen trotz ähnlicher Wirksamkeit erübrigen. Damit
wird das Problem der bei der Verwendung von Anschlägen
mitunter auftretenden Anschlaggeräusche beseitigt.

Die nachgiebigen Wandungsteile können einstückig mit den
die Ringe untereinander und /oder gegenüber der Trennwand abdichtenden Dichtelementen ausgebildet sein, was
die Herstellung erleichtert. Auch ist eine einstückige
Ausbildung mit gummielastischen Federkörpern möglich,
welche nach vorausgegangener Relativverdrehung eine
Rückführung der Ringe in eine neutrale gegenseitige Zuordnungsposition bewirken.

Die Erfindung wird nachfolgend anhand der in der Anlage
beigefügten Zeichnung weiter erläutert. Es zeigen:

Figur 1 einen Drehschwingungsdämpfer in halbgeschnittener Ansicht von vorn.

Figur 2 den in Figur 1 gezeigten Drehschwingungsdämpfer
in halbgeschnittener Ansicht von der Seite.

Figur 3 eine in der Draufsicht geschnittene Segmentkammer einer weiteren Ausführung des Drehschwingungsdämpfers.

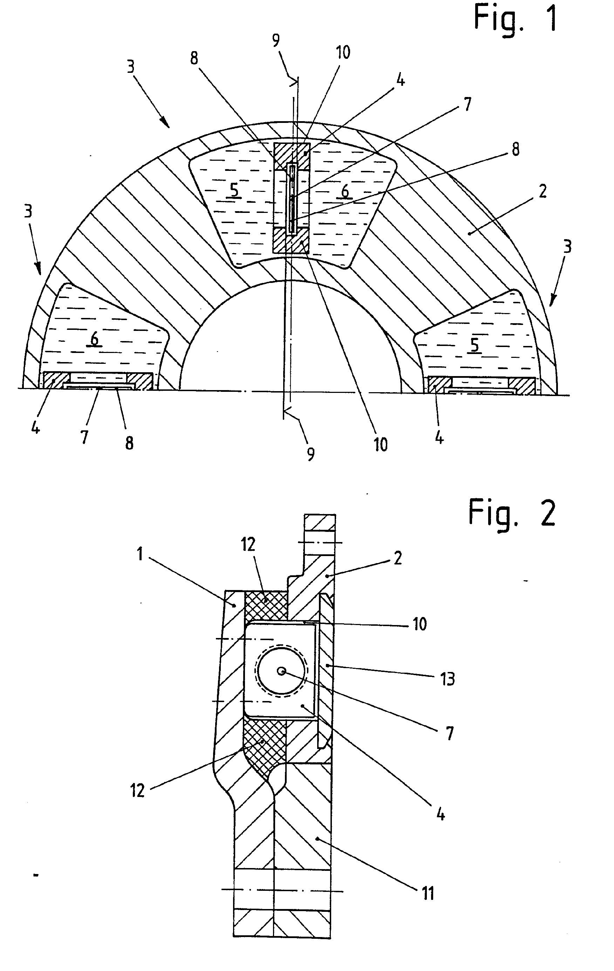

Der in den Figuren 1 und 2 gezeigte Drehschwingungsdämpfer besteht aus dem Antriebsring 1 und dem Abtriebsring 2.

Diese begrenzen gemeinsam 4 gleichmäßig auf den Umfang
verteilte Segmentkammern 3 und sind durch den die Segmentkammer 3 umschließenden Federkörper 12 aus Gummi
unlösbar verbunden. Der Abtriebsring 2 weist stirnseitig eine kreisringförmige Ausnehmung auf, welche
durch einen eingebördelten Abschlußdeckel 13 flüssigkeitsdicht geschlossen ist. Der Abschlußdeckel 13
bildet im betriebsfähigen Zustand einen einstückigen
Bestandteil des Abtriebsringes 2.

Die von dem Abtriebsring 2, dem Federkörper 12 und dem
Antriebsring 1 umschlossenen Segmentkammern 3 sind mit
einem Gemisch aus Glykol und Wasser gefüllt und enthalten sich in radialer Richtung erstreckende Trennwände 4, die unverdrehbar an dem Antriebsring 1 festgelegt und durch eine umlaufende Dichtlippe 10 gegenüber dem Federkörper 12, dem Abtriebsring 2 und dem
Abschlußdeckel 13 beweglich abgedichtet sind. Die Trennwände 4 haben im wesentlichen eine radiale Erstreckung.

Etwa im mittleren Bereich enthalten die Trennwände 4
einen nachgiebigen Wandungsteil in Gestalt eines dünnen,
steifen Blättchens, das zwischen Anschlägen 9 zwischen
den Teilkammern 5,6 der Segmentkammern hin und her bewegbar ist. Die Größe und das Spiel dieses nachgiebigen
Wandungsteiles sind so bemessen, daß sich Einleitung
bei Drehschwingungen einer kleinen Verdrehamplitude in
den Antriebsflansch 1 keine Druckveränderung in den
Teilkammern 5,6 ergibt. Es wird daher in diesem Falle
auch keinerlei Flüssigkeit durch die Verbindungsöffnung 7
zwischen den Teilkammern 5,6 hindurchgepreßt und keine
Dämpfungswirkung erzielt. Entsprechende Verdrehschwingungen werden daher in einem ausgezeichneten Maße isoliert und sind in dem Abtriebsring 2 nicht spürbar.

Bei Einleitung von Drehschwingungen einer größeren Amplitude gelangt der nachgiebige Wandungsteil 8 abwechselnd an dem linken und dem rechten der beiden, ihm vorgelagerten Anschläge zur Anlage, woran sich jeweils die Hindurchpressung von Flüssigkeit durch die Öffnung 7 in die Teilkammer 5 bzw. 6 niedrigeren Druckes anschließt. Eine gute Dämpfungswirkung in bezug auf Drehschwingungen dieser Art ist hiervon die Folge. Der Führungsring 11 dient der Gewährleistung einer rotationssymetrischen Zuordnung des Abtriebsringes 2 zu dem Antriebsring 1. Seine Verwendung empfiehlt sich vor allem bei kleinen Abmessungen des Drehschwingungsdämpfers, wenn anderweitige Zentriermittel nicht vorhanden sind. Die gezeichnete Ausführung ist auch ohne diesen verwendbar.

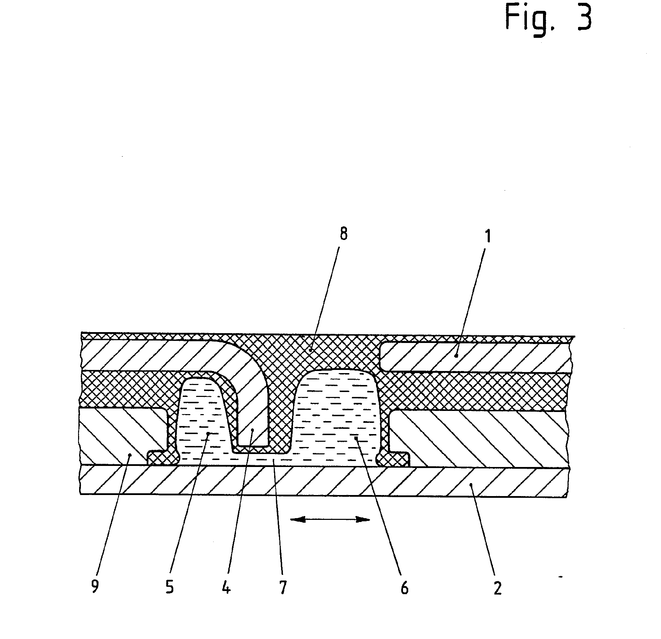

Bei der in Figur 3 gezeigten Ausführung ist die Trennwand 4 einstückig mit dem Antriebsring 1 ausgebildet und der nachgiebige Wandungsteil der Teilkammer 6 zwischen derselben und der Außenluft angeordnet. Die Ausführung läßt sich besonders kostengünstig erzeugen. Sie kann durch die mit dem Abtriebsring 2 verbundene Trägheitsmasse 9 Verwendung als Schwingungstilger finden, wobei sich die diesbezügliche Wirksamkeit vergrößern läßt durch eine Ausführung, bei der die oberhalb des Abtriebsringes 2 vorhandenen Teile anstelle desselben in spiegelbildlicher Anordnung nochmals vorhanden und durch ein umlaufendes Band mit den Teilen verbunden sind. Dabei ist eine gegenseitige Zuordnung in der Weise, daß jeder der Teilkammern 5,6 in einem Wandungsbereich durch einen nachgiebigen Wandungsteil 8 begrenzt ist, möglich und von Vorteil.

- 8 -

Die entsprechenden Wandungsteile verhindern bei Einleitung von Drehschwingungen kleiner Amplitude das Auftreten einer Drucksteigerung in den Teilkammern 5,6,
wodurch entsprechende Schwingungen gut isoliert werden.
Bei Einleitung von Drehschwingungen einer großen Amplitude wird demgegenüber Flüssigkeit durch die Verbindungsöffnung 7 unter Erzielung einer Drosselwirkung
in den Raum niedrigeren Druckes gepresst. Entsprechende Drehschwingungen erfahren dadurch eine Dämpfung.

Dr. H. Weissenfeld-Richters

Patentanwältin

0268005

6940 Weinheim/Bergstraße
Telefon (0 62 01) 80-86 18
Telex 465 531 -- 14

16. März 1987
Mo/ha
M 402/Europa


Anmelderin: Firma Carl Freudenberg, 6940 Weinheim


Drehschwingungsdämpfer


Patentansprüche


1. Drehschwingungsdämpfer, umfassend einen Antriebs- und einen Abtriebsring, die relativ verdrehbar sind und einen Abstand von der Rotationsachse aufweisende, flüssigkeitsgefüllte Segmentkammern begrenzen, wobei die Segmentkammern in Umfangrichtung von Wandungen des einen Ringes begrenzt und in dem dazwischenliegenden Sektor von einer mit dem anderen Ring verbundenen Trennwand in zwei Teilkammern unterteilt sind, die jeweils mindestens eine Verbindungsöffnung verbindet, dadurch gekennzeichnet, daß die Teilkammern (5,6) in wenigstens einem Teilbereich durch nachgiebige Wandungsteile (8) begrenzt sind.

2. Drehschwingungsdämpfer nach Anspruch 1, dadurch gekennzeichnet, daß nachgiebige Wandungsteile (8) zwischen den Teilkammern (5,6) und der Außenluft vorgesehen sind.

3. Drehschwingungsdämpfer nach Anspruch 1, dadurch gekennzeichnet, daß nachgiebige Wandungsteile (8) zwischen den Teilkammern (5,6) vorgesehen sind.

4. Drehschwingungsdämpfer nach Anspruch 1 bis 3, dadurch gekennzeichnet, daß die nachgiebigen Wandungsteile (8) zwischen Anschlägen (9) bewegbar sind.

5. Drehschwingungsdämpfer nach Anspruch 1 bis 4, dadurch gekennzeichnet, daß die nachgiebigen Wandungsteile (8) federnd nachgiebig sind.

6. Drehschwingungsdämpfer nach Anspruch 1 bis 5, dadurch gekennzeichnet, daß die nachgiebigen Wandungsteile (8) einstückig mit den die Ringe (1,2) untereinander und/oder gegenüber der Trennwand (4) abdichtenden Dichtelementen (10) ausgebildet sind.

7. Drehschwingungsdämpfer nach Anspruch 1 bis 6, dadurch gekennzeichnet, daß die nachgiebigen Wandungsteile (8) durch Federkörper gebildet werden, die zugleich der Rückführung der Ringe 1,2 in eine neutrale gegenseitige Zuordnung nach vorausgegangener relativer Drehung dienen.

Fig. 1

Fig. 2